# EUROPÄISCHE PATENTANMELDUNG

(11) **EP 1 317 882 A2**
(43) Veröffentlichungstag der Anmeldung: **11.06.2003**
(21) Anmeldenummer: 02003506.9
(22) Anmeldetag: 15.02.2002
(51) Int. Cl.: A01K 63/06

(54) **Vorrichtung zur Abkühlung des Wassers von Aquarien**

(30) Priorität: 06.12.2001 DE 20119832 U
(71) Anmelder: Weidl, Wolfgang, 27755 Delmenhorst (DE)
(72) Erfinder: Weidl, Wolfgang, D-27755 Delmenhorst (DE)
(74) Vertreter: Köchling, Conrad, Dipl.-Ing.

(57) **Zusammenfassung**

Um eine Vorrichtung zur Abkühlung des Wassers von Seewasseraquarien, zu schaffen, die in der Anschaffung kostengünstig ist und geringe Betriebskosten verursacht, wobei auch die Geräuschbildung beim Betrieb der Vorrichtung niedrig gehalten werden soll, wird vorgeschlagen, dass die Vorrichtung aus einem Behältnis (1) besteht, das einen Zulaufanschluss (2) für den Zulauf des zu kühlenden Wassers aufweist, an den eine Verteilvorrichtung anschließt, durch den das zulaufende Wasser sprühnebelartig im Behältnis (1) verteilbar ist, dass ferner das Behältnis (1) eine Luftzuströmöffnung (7) sowie eine Luftabströmöffnung (8) aufweist, wobei in das Behältnis (1) oder Gebläse (13) integriert ist mittels derer die Luft durch das Behältnis (1) förderbar ist, so dass das sprühnebelartig verteilte warme Wasser mittels des Lufstromes verdunstbar und kühlbar ist, und dass das Behältnis (1) einen Ablaufanschluss (14) für das gekühlte Wasser aufweist.

## Beschreibung

Die Erfindung betrifft eine Vorrichtung zur Abkühlung des Wassers von Aquarien.

Im Stand der Technik ist es insbesondere in der Seewasseraquaristik bekannt, das warme Wasser eines Aquariums zu kühlen, sofern die Wassertemperatur im Aquarium zu hoch ist. Hierzu ist es bekannt, übliche Kühlgeräte mit Kompressor und Kältemittel einzusetzen. Solche Kühlgeräte sind relativ teuer in der Anschaffung, wobei auch die Betriebskosten relativ hoch sind. Zudem wird als nachteilig angesehen, dass die Kompressoren solcher Kühlgeräte zur Geräuschbildung neigen, was insbesondere dann als unangenehm empfunden wird, wenn die Einrichtungen in Wohnräumen oder dergleichen angeordnet sind.

Ausgehend von diesem Stand der Technik liegt der Erfindung die Aufgabe zugrunde, eine Vorrichtung gattungsgemäßer Art zu schaffen, die in der Anschaffung kostengünstig ist und geringe Betriebskosten verursacht, wobei auch die Geräuschbildung beim Betrieb der Vorrichtung niedrig gehalten werden soll.

Zur Lösung dieser Aufgabe schlägt die Erfindung vor, dass die Vorrichtung aus einem Behältnis besteht, das einen Zulaufanschluss für den Zulauf des zu kühlenden Wassers aufweist, wobei an den Zulaufanschluss eine Verteilvorrichtung, insbesondere ein Sprüharm, insbesondere ein drehbar gelagerter Sprüharm, anschließt, durch den das zulaufende Wasser tropfenartig oder sprühnebelartig im Behältnis verteilbar ist, dass ferner das Behältnis eine Luftzuströmöffnung sowie eine Luftabströmöffnung aufweist, wobei in das Behältnis ein Druck- oder Sauggebläse integriert ist oder an das Behältnis angeschlossen ist, mittels derer die Luft durch das Behältnis förderbar ist, so dass das tropfenartig oder sprühnebelartig verteilte warme Wasser mittels des Lufstromes verdunstbar und kühlbar ist, und dass das Behältnis einen Ablaufanschluss für das gekühlte Wasser aufweist.

Gemäß der Erfindung wird das Wasser aus dem Aquarium in geeigneter Weise abgezogen und über den Zulaufanschluss in die Vorrichtung eingespeist. Das zulaufende Wasser wird über den Sprüharm, der vorzugsweise drehbar gelagert ist, in dem Behältnis in Form eines Tropfennebels oder Sprühnebels verteilt, so dass der Wasserstrahl entsprechend zerteilt wird, um eine große Oberfläche zur Verfügung zu stellen. Ferner wird in das Behältnis Luft eingeblasen oder durch das Behältnis gesaugt, wobei die Luftströmung Feuchte aus dem tropfenartig oder sprühnebelartig verteilten Wasser aufnimmt. Durch die Verdunstung eines Teils des Wassers wird Verdunstungskälte erzeugt, so dass das Restwasser, welches sich im Bereich des Ablaufanschlusses sammelt und von diesem zum Aquarium zurückgeführt werden kann, deutlich kälter ist, als das über den Zulaufanschluss zugeführte Aquarienwasser. Hierdurch ist es in einfacher Weise möglich, das Wasser des Aquariums zu kühlen, wobei die Vorrichtung selbst kostengünstig hergestellt werden kann und nur geringe Betriebskosten verursacht, da lediglich das Gebläse, welches als elektrisches Gebläse ausgebildet ist, mit Strom versorgt werden muss. Der Stromverbrauch ist sehr gering, so dass auch die Betriebskosten gering sind. Selbstverständlich ist es auch möglich, die Vorrichtung mit einem Thermostaten zu koppeln, so dass das Gebläse nur dann in Betrieb gesetzt wird, wenn das Aquarienwasser zu warm ist, um eine entsprechende Kühlung des aus dem Aquarium abgezweigten Wasserstromes zu erreichen. Sofern das Aquarium die gewünschte Temperatur hat, kann aufgrund des Thermostaten die Vorrichtung abgeschaltet werden, insbesondere das Gebläse abgeschaltet werden, so dass die Vorrichtung stillgelegt ist.

Zur Abförderung des Wassers aus dem Aquarium zum Zulaufanschluss und zum Zurückführen des Wassers über den Ablaufanschluss in das Aquarium kann eine separate Pumpeinrichtung vorgesehen sein. Es ist aber auch möglich, die Vorrichtung in einen Filterkreislauf zu integrieren, der pumpengestützt Wasser aus dem Aquarium abzieht und in das Aquarium zurückfördert.

Um die Kühlwirkung noch zu verbessern ist vorgesehen, dass die Luftzuströmöffnung und die Luftabströmöffnung relativ zum Zulaufanschluss und zum Ablaufanschluss so angeordnet ist, dass ein Luftdurchsatz im Gegenstrom zum Wasserdurchsatz erzeugt ist.

Obwohl auch eine Betriebsweise im Querstrom oder im Gleichstrom möglich ist, ist eine Betriebsweise im Gegenstrom besonders effektiv.

Um die Wirkungsweise noch weiter zu verbessern, ist zudem vorgesehen, dass im Behältnis in Strömungsrichtung des Wassers zwischen dem Sprüharm und dem Ablaufanschluss ein netzartiges oder raumgitterartiges bzw. eine große Verdunstungsoberfläche zur Verfügung stellendes Substrat angeordnet ist.

Beispielsweise kann in dem Behältnis ein schwammartiges Gebilde oder ein Gebilde aus groben Fasern, insbesondere Kunststofffasern, angeordnet sein, wodurch einerseits die Verdunstungsoberfläche des aufgesprühten Wassers noch vergrößert wird und andererseits die Verweilzeit des sprühnebelartig oder tropfenartig verteilten Wassers in dem Behältnis vergrößert wird, so dass die Verdunstungswirkung und damit die Kühlwirkung der Vorrichtung verbessert ist. Das Gebilde sollte eine grobe Porosität aufweisen und zudem aus Material bestehen, das Wasser nicht speichern kann.

Des Weiteren kann auch vorgesehen sein, dass im Behältnis im Bereich des Ablaufanschlusses ein weiteres raumgitterartiges Substrat angeordnet ist.

Hierdurch wird eine weitere Zone zur Verfügung gestellt, in der eine Verdunstung und damit eine Abkühlung erreicht werden kann.

Eine bevorzugte Ausbildung der Vorrichtung wird darin gesehen, dass am Behältnis neben dem Durchströmbereich des Wassers und separiert von diesem eine Kammer ausgebildet ist, in der mindestens ein Gebläse oder ein Ventilator gehaltert ist, wobei die Kammer die Luftzutrittsöffnung und eine zum Durchströmbereich des Wassers offene, vorzugsweise nahe des Ablaufanschlusses vorgesehene, Luftdurchströmöffnung aufweist, wobei etwa im Bereich des Zulaufanschlusses die Luftabströmöffnung ausgebildet ist.

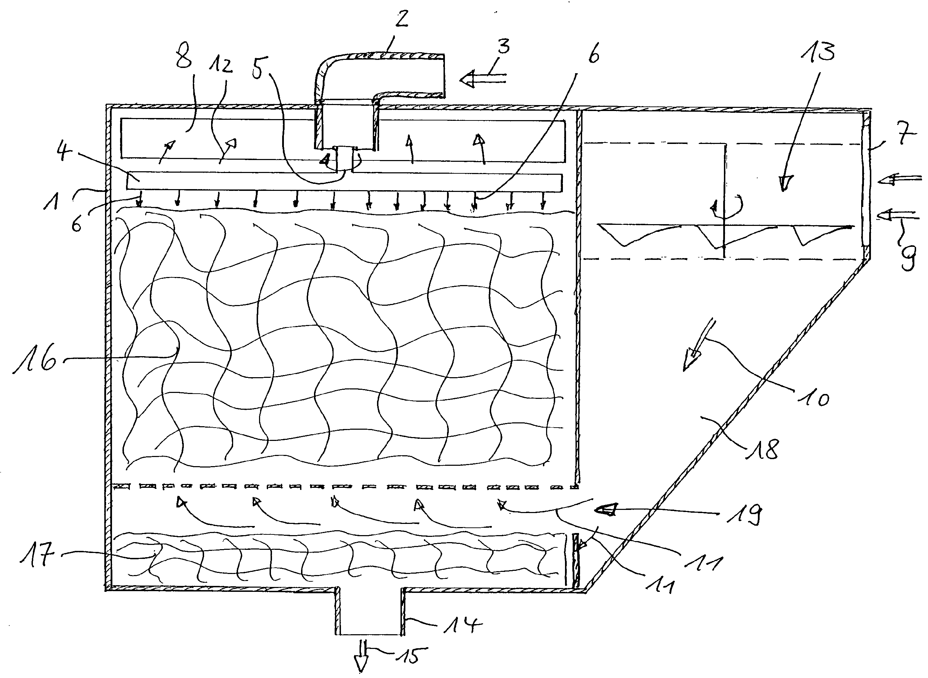

Ein bevorzugtes Ausführungsbeispiel ist in der Zeichnung gezeigt und im Folgenden näher beschrieben.

Es zeigt:

Die einzige Zeichnungsfigur eine erfindungsgemäße Vorrichtung im Querschnitt gesehen.

In der Zeichnung ist eine Vorrichtung zur Abkühlung des Wassers von Aquarien, vorzugsweise Seewasseraquarien gezeigt. Die Vorrichtung besteht aus einem Behältnis (1), beispielsweise aus Kunststoff, welches einen Zulaufanschluss 2 für den Zulauf des zu kühlenden Wassers aufweist. Die Zulaufrichtung ist bei 3 angegeben. Das zulaufende Wasser wird aus dem Aquarium abgezweigt und über den Zulaufanschluss in das Behältnis 1 eingeleitet. An dem Zulaufanschluss 2 ist innenseitig des Behältnisses 1 ein Sprüharm 4 drehbar gelagert (die Drehrichtung ist bei 5 angegeben). Das zulaufende Wasser wird somit über den Zulaufanschluss 2 in den Sprüharm 4 eingeleitet und von diesem in Form von Tröpfchen oder in Form eines Sprühnebels abgegeben. Die Abgaberichtung ist bei 6 angegeben. Das Behältnis 1 weist ferner eine Luftzuströmöffnung 7 sowie eine Luftabströmöffnung 8 auf. Die Luftströmung ist durch die Pfeile 9, 10, 11, 12 angegeben. In das Behältnis 1 ist in geeigneter Weise ein entsprechendes Gebläse 13 integriert, beispielsweise in Form eines elektrischen Ventilators. Mittels dieses Gebläses 13 wird die Luft über die Zuströmöffnung 9 angesaugt und entlang des Strömungspfades 10, 11 durch das Behältnis 1 geführt, bis die Luft bei 8/12 das Behältnis wieder verlassen kann. Durch die Luft wird ein Teil der Tropfennebel oder Sprühnebel verdunstet, so dass Verdunstungskälte entsteht und insgesamt eine Abkühlung des durchströmenden Tropfen- oder Sprühnebels erreicht wird. Dieses gekühlte Wasser kann sich beispielsweise am Boden des Behältnisses 1 sammeln und über einen Ablaufanschluss 14 abgezogen werden. Die Abzugsrichtung ist bei 15 angegeben. Dieses abgezogene Wasser kann wiederum in das Aquarium zurückgeleitet werden, so dass das Aquarienwasser somit gekühlt werden kann. Die Luftzuströmöffnung 7 und die Luftabströmöffnung 8 sind relativ zum Zulaufanschluss 2 und Ablaufanschluss 14 so angeordnet, dass ein Luftdurchsatz im Gegenstrom zum Wasserdurchsatz erzeugt ist, was für die gewünschte Kühlwirkung und Verdunstungswirkung besonders vorteilhaft ist. Zur weiteren Verbesserung der Kühlwirkung ist im Behältnis 1 in Strömungsrichtung des Wassers zwischen dem Sprüharm 4 und dem Ablaufanschluss 14 ein netzartiges oder raumgitterartiges, eine große Verdunstungsoberfläche zur Verfügung stellendes Substrat 16, beispielsweise in Form eines Wirrfaserkörpers oder Schwammes angeordnet. Zusätzlich kann auch im Behältnis 1 im Bereich des Ablaufanschlusses 14 in Strömungsrichtung des Wassers vor diesem ein weiteres raumgitterartiges Substrat 17 angeordnet sein, so dass die vorbeiströmende Luft entsprechend den Pfeilen 11 auch hier noch zusätzlich Wasser verdunsten kann und somit die Kühlwirkung noch verbessert wird.

Im Ausführungsbeispiel ist am Behältnis 1 neben dem eigentlichen Durchströmbereich des Wassers und separiert von diesem eine Kammer 18 ausgebildet, in der mindestens ein Gebläse oder Ventilator 13 gehaltert ist. Die Kammer 18 weist die Luftzutrittsöffnung 7 vor dem Gebläse 13 und nach dem Gebläse eine Luftdurchströmöffnung bei 19 auf, die im Niveau oberhalb des Ablaufanschlusses 14 liegt. Die Luftabströmöffnung 8 ist im oberen Bereich des Behältnisses 1 in unmittelbarer Nähe des Zulaufanschlusses 2 vorgesehen. Die erfindungsgemäße Vorrichtung ist einfach und kostengünstig zu fertigen, wobei die Betriebskosten für den Betrieb der Vorrichtung äußerst gering gehalten werden können. Auch unerwünschte Geräuschbildungen sind weitestgehend auszuschließen, da das Gebläse 13 sehr geräuscharm, nahezu geräuschlos ausgebildet sein kann.

Auch im Falle von Reparaturen sind die Einzelteile einfach zugänglich und auszuwechseln, wobei beispielsweise das Gebläse durch die Luftzutrittsöffnung 7 zugänglich ist und durch diese entnommen oder eingesetzt werden kann. Das Behältnis kann vorzugsweise oberseitig einen lösbaren Deckel aufweisen, so dass das gesamte Oberteil abzunehmen ist und der Sprüharm sowie die Substrate 16 bzw. 17 zugänglich sind.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Abkühlung des Wassers von Aquarien, insbesondere Seewasseraquarien,
**dadurch gekennzeichnet, dass** die Vorrichtung aus einem Behältnis (1) besteht, das einen Zulaufanschluss (2) für den Zulauf des zu kühlenden Wassers aufweist, wobei an den Zulaufanschluss (2) eine Verteilvorrichtung, insbesondere ein Sprüharm (4), insbesondere ein drehbar gelagerter Sprüharm, anschließt, durch den das zulaufende Wasser tropfenartig oder sprühnebelartig im Behältnis (1) verteilbar ist, dass ferner das Behältnis (1) eine Luftzuströmöffnung (7) sowie eine Luftabströmöffnung (8) aufweist, wobei in das Behältnis (1) ein Druck- oder Sauggebläse (13) integriert ist oder an das Behältnis angeschlossen ist, mittels derer die Luft durch das Behältnis (1) förderbar ist, so dass das tropfenartig oder sprühnebelartig verteilte warme Wasser mittels des Lufstromes verdunstbar und kühlbar ist, und dass das Behältnis (1) einen Ablaufanschluss (14) für das gekühlte Wasser aufweist.

2. Vorrichtung nach Anspruch 1,
**dadurch gekennzeichnet, dass** die Luftzuströmöffnung (7) und die Luftabströmöffnung (8) relativ zum Zulaufanschluss (2) und zum Ablaufanschluss (14) so angeordnet ist, dass ein Luftdurchsatz im Gegenstrom zum Wasserdurchsatz erzeugt ist.

3. Vorrichtung nach Anspruch 1 oder 2,
**dadurch gekennzeichnet, dass** im Behältnis (1) in Strömungsrichtung des Wassers zwischen dem Sprüharm (4) und dem Ablaufanschluss (14) ein netzartiges oder raumgitterartiges bzw. eine große Verdunstungsoberfläche zur Verfügung stellendes Substrat (16) angeordnet ist.

4. Vorrichtung nach einem der Ansprüche 1 bis 3,
**dadurch gekennzeichnet, dass** im Behältnis (1) im Bereich des Ablaufanschlusses (14) ein weiteres raumgitterartiges Substrat (17) angeordnet ist.

5. Vorrichtung nach einem der Ansprüche 1 bis 4,
**dadurch gekennzeichnet, dass** am Behältnis (1) neben dem Durchströmbereich des Wassers und separiert von diesem eine Kammer (18) ausgebildet ist, in der mindestens ein Gebläse (13) oder ein Ventilator gehaltert ist, wobei die Kammer (18) die Luftzutrittsöffnung (7) und eine zum Durchströmbereich des Wassers offene, vorzugsweise nahe des Ablaufanschlusses (14) vorgesehene, Luftdurchströmöffnung (19) aufweist, wobei etwa im Bereich des Zulaufanschlusses (3) die Luftabströmöffnung (8) ausgebildet ist.
